Europäisches Patentamt

**European Patent Office**

Office européen des brevets

(11) Veröffentlichungsnummer: **0 096 188**
**B1**

(12) **EUROPÄISCHE PATENTSCHRIFT**

(45) Veröffentlichungstag der Patentschrift:
**18.01.89**

(21) Anmeldenummer: **83103596.9**

(22) Anmeldetag: **14.04.83**

(51) Int. Cl.⁴: **B 60 J 5/00**

(54) **Tür, insbesondere Fahrzeugtür.**

(30) Priorität: **05.06.82 DE 3221322**

(43) Veröffentlichungstag der Anmeldung:
**21.12.83 Patentblatt 83/51**

(45) Bekanntmachung des Hinweises auf die Patenterteilung:
**18.01.89 Patentblatt 89/3**

(84) Benannte Vertragsstaaten:
**DE FR GB IT SE**

(56) Entgegenhaltungen:
**WO-A-81/03467**
**DE-A- 1 923 943**
**DE-A- 2 127 724**
**DE-A- 2 240 858**
**DE-A- 2 510 220**
**DE-A- 3 002 134**
**DE-A- 3 104 681**

(73) Patentinhaber: **Gebr. Happich GmbH,**
**Postfach 10 02 49 Clausenbrücke 1,**
**D-5600 Wuppertai 1 (DE)**
Patentinhaber: **AUDI AG, Postfach 220,**
**D-8070 Ingolstadt (DE)**

(72) Erfinder: **Mahler, Gert, Kreuzstrasse 5,**
**D-5608 Radevormwald (DE)**
Erfinder: **Falkenroth, Heinz-Jürgen, Körnerstrasse 8,**
**D-5828 Ennepetal 1 (DE)**
Erfinder: **Leitermann, Wulf, Kirschenweg 9, D-7107 Bad Wimpfen (DE)**
Erfinder: **Boms, Manfred, Gertbergstrasse 37,**
**D-6934 Neckargerach (DE)**

ACTORUM AG

## Beschreibung

Die Erfindung bezieht sich auf eine Tür der im Oberbegriff des Patentanspruchs 1 angegebenen Art (DE-A-2 240 858).

Fahrzeugtüren sind im allgemeinen aus einem Türaussenblech und einem Türinnenblech mit einer dazwischen angeordneten Stahlrahmenkonstruktion als tragendes Teil gebildet, welches auch den Fensterrahmen und die darin eingesetzte Fensterscheibe trägt. Solche Türen sind recht schwer sowie in der Herstellung aufwendig und kostenintensiv und weiter mit dem Nachteil einer hohen Korrosionsanfälligkeit behaftet.

Die DE-A-2 240 858 zeigt und beschreibt eine Tür, insbesondere eine Fahrzeugtür, die ein Türinnenteil aus Kunststoff, ein Türaussenteil aus Kunststoff, einen Fensterrahmen und eine Fensterscheibe aufweist. Auf Seite 6, letzter Absatz dieser Druckschrift ist angegeben, dass der Fensterrahmen bevorzugterweise ein separat ausgebildetes und an der Innenwand der Tür zu befestigendes Teil ist. Allerdings ist auf Seite 17 dieser Druckschrift auch offenbart, dass der Fensterrahmen einheitlich bzw. einstückig entweder mit der Aussenverkleidung oder der Innenwand der Tür hergestellt werden kann.

Aufgabe der Erfindung ist es, eine Tür, insbesondere eine Fahrzeugtür zu schaffen, die sich gegenüber dem Stand der Technik auszeichnen soll durch ein möglichst geringes Gewicht, einen aus nur wenigen Einzelteilen bestehenden Aufbau, durch eine einfache, kostengünstige Herstellbarkeit, durch eine für den Gebrauchszweck voll ausreichende Festigkeit, insbesondere Verwindungssteifigkeit, durch eine ästhetisch ansprechende Gestaltung und ein günstige Luftwiderstandsbeiwerte gewährleistendes Styling. Gemäss der Erfindung wird diese Aufgabe durch die im kennzeichnenden Teil des Patentanspruchs 1 angegebenen Massnahmen gelöst.

Das Türinnenteil ist aufgrund der vorgesehenen Kastenbauweise schon von Hause aus relativ formstabil und daher geeignet, die tragende Funktion zu übernehmen. Durch das vorzugsweise vorgesehene Verkleben oder Verschweissen des Türinnenteils mit dem Türaussenteil wird die Formstabilität, insbesondere in bezug auf die Verwindungssteifigkeit optimiert. Letzteres gilt insbesondere auch für die erfindungsgemäss vorgesehene Verbindung der Fensterscheibe mit dem Fensterrahmen, die durch die Anlageverbindung der Fensterscheibe mit den beiden Schenkeln des im Querschnitt U-förmigen Fensterrahmens bewirkt, dass dieser eine mit einem geschlossenen Kastenprofil vergleichbare Festigkeit, insbesondere Torsionsfestigkeit erhält. Die erfindungsgemässe Tür besteht aus lediglich drei Hauptbestandteilen, nämlich dem tragenden Türinnenteil, dem das Türinnenteil verkleidenden und versteifenden Türaussenteil und der Fensterscheibe. Die Bestandteile der Tür sind, und dies kann auch für die Fensterscheibe zutreffen, aus formstabilem, gegebenenfalls durch Glasfasern oder dergleichen verstärktem Kunststoff gebildet, daher einfach herzustellen, leicht von Gewicht, korrosionsbeständig und besonders einfach durch Schweissen oder Kleben zusammenfügbar. Durch die aussenseitig auf den Fensterrahmen fest aufgebrachte Fensterscheibe ergibt sich neben dem Vorteil einer festen, formstabilen und verwindungssteifen Verbundbauweise ein besonders günstiger Luftwiderstandsbeiwert, da hier auf nach aussen vorspringende Fensterrahmenteile gänzlich verzichtet worden ist.

Die Erfindung sieht in bevorzugter Weise vor, dass das Türinnenteil mit Fensterrahmen aus einem einwandigen Kunststoffteil besteht, wobei der Fensterrahmen einen etwa U-förmigen Querschnitt mit einem senkrecht zur Türebene nach aussen offenen Kanal aufweist, welcher sich umlaufend über den Randbereich des Türinnenteils fortsetzt und in offener Verbindung mit einem entsprechend geformten Querkanal etwa in der Türmitte steht und dass das aus einem ebenfalls einwandigen Kunststofformteil bestehende Türaussenteil nebst Fensterscheibe unter etwa paralleler Anlage und zumindest im Fensterrahmenbereich vollständiger Schliessung des Kanals mit dem Türinnenteil zusammengefügt ist. Durch diese erfindungsgemässe Ausgestaltung erhält das Türinnenteil eine labyrinthförmige Ausbildung und eine Stabilisierung in Längs-, Quer- und auch Diagonalrichtung.

Um das Türinnenteil und Türaussenteil ohne Stabilitätsverlust relativ dünnwandig ausbilden zu können, sieht eine weitere Ausgestaltung der Erfindung vor, zwischen dem Türaussen- und Türinnenteil ein Verstärkungselement anzuordnen, welches sich auch ganz oder bereichsweise in den Fensterrahmen hinein erstrecken kann. Das Verstärkungselement ist vorzugsweise mit dem Türinnenteil verklebt und bietet den Vorteil einer mechanischen und thermischen Stabilisierung der Tür.

Weitere Merkmale, vorteilhafte Ausgestaltungen und zweckmässige Weiterbildungen der Erfindung sind in den Unteransprüchen gekennzeichnet.

Ausführungsbeispiele der Erfindung werden nachfolgend anhand der Zeichnung erläutert. Es zeigen

Fig. 1 die Gesamtansicht einer erfindungsgemässen Tür,

Fig. 2 die Explosivdarstellung einer erfindungsgemässen Tür,

Fig. 3 die Explosivdarstellung einer erfindungsgemässen gegenüber der nach Fig. 2 abgewandelten Tür,

Fig. 4 eine Ansicht des Türinnenteils, die noch kein vorgesetztes Türaussenteil aufweist und

Fig. 5 den Schnitt durch eine erfindungsgemässe Tür, etwa folgend der Schnittlinie V–V nach Fig. 1.

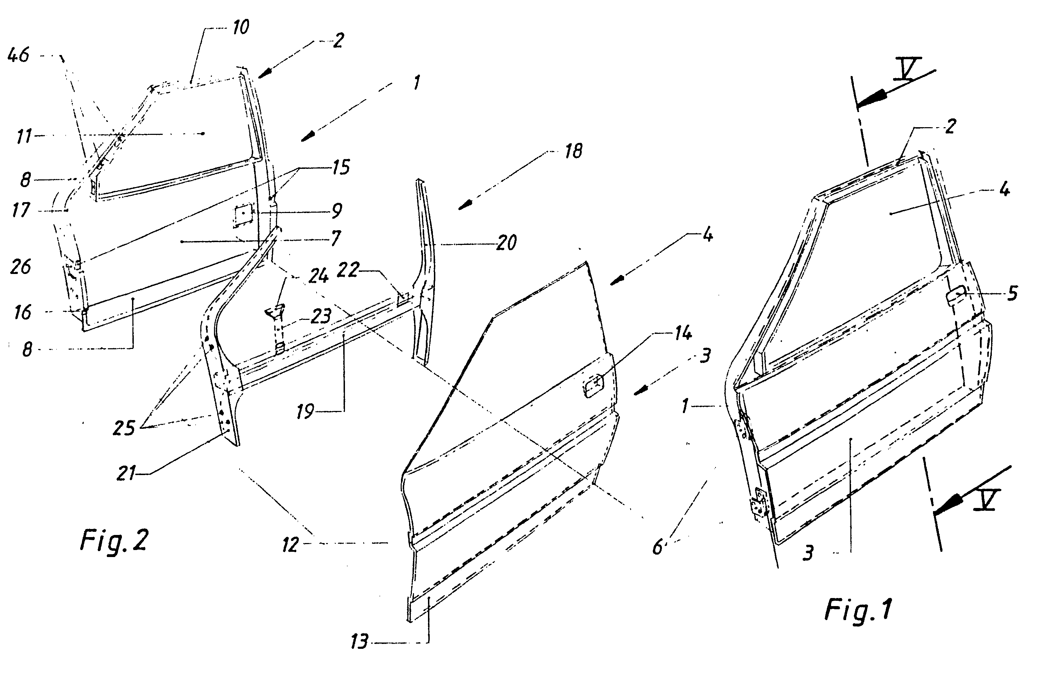

Die in Fig. 1 dargestellte Fahrzeugtür besteht aus einem tragenden Türinnenteil 1, welches aus Kunststoff einstückig mit einem Fensterrahmen 2 hergestellt ist und aussenseitig versteift und insbesondere verkleidet ist durch ein Türaussenteil 3 und durch eine Fensterscheibe 4. Die Tür ist mit einem üblichen, im einzelnen nicht dargestellten Schloss 5 und an einer Stirnfläche mit Scharnieren 6 ausgerüstet.

Fig. 2 zeigt in einer Explosivdarstellung eine erste erfindungsgemässe Ausbildungsform der Tür. Es ist ersichtlich, dass das Türinnenteil 1 ein kastenförmiges Türunterteil 7 mit einem einstückig daran angeformten Fensterrahmen 2 umfasst. Die Kastenform des Türunterteils 7 ist durch einen nach aussen abgewinkelten Rand 8 gegeben. Der abgewinkelte Rand 8 erstreckt sich umlaufend über das gesamte Türinnenteil 1 und nimmt daher auch an der Bildung des Fensterrahmens 2 teil. Letzterer weist eine U-förmige Querschnittsform mit gleichlang ausgebildeten Schenkeln und mit einer ebenso wie das Türunterteil 7 nach aussen gerichteten Öffnung auf. Der Innenschenkel 10 des Fensterrahmens 2 umrahmt die Fensterrahmenöffnung 11. Im Boden des kastenförmig gestalteten Türunterteils 7 ist eine Austrittsöffnung 9 für Frisch- oder Warmluft vorgesehen.

In Fig. 2 ist weiterhin ein Türaussenteil 3 dargestellt, welches bei diesem Ausführungsbeispiel erfindungsgemäss einstückig mit der Fensterscheibe 4 ausgebildet ist und daher aus einem durchsichtigen, jedoch lackierbaren Kunststoff besteht. In etwa der Mitte des Türaussenteils 3 weist dieses eine sich über die gesamte Breite erstreckende und nach innen gezogen verlaufende Nut 12 auf. Am unteren Endbereich des Türaussenteils 3 ist eine durchlaufend zurückspringende Randkante 13 vorgesehen. Schliesslich weist das Türaussenteil 3 noch eine Öffnung 14 für einen Türgriff auf.

In der einfachsten Ausführungsform besteht die komplette Tür aus lediglich zwei Teilen, nämlich dem Türinnenteil 1 mit einstückig angeformtem Fensterrahmen 2 und dem Türaussenteil 3 mit einstückig angeformter Fensterscheibe 4. Beim Zusammenbau der Tür werden Türinnenteil 1 und Türaussenteil 3 deckungsgleich aufeinandergelegt und randseitig miteinander verklebt oder verschweisst, wobei unter Verschweissen insbesondere auch das Ultraschallschweissen verstanden sein soll. Beim Auflegen des Türaussenteils 3 auf das Türinnenteil 1 greift ersteres mit der Nut 12 in entsprechende Ausnehmungen 15 und mit der Randkante 13 in eine entsprechende Vertiefung 16 am Rand 8 des Türinnenteils 1 ein. Um die Auflagefläche zu vergrössern, ist der Rand 8 mit einem nach aussen gerichteten Umfangsflansch 17 ausgebildet.

Die aus Türinnenteil 1 und Türaussenteil 3 zusammengefügte Tür ist aufgrund der geschlossenen Kastenbauweise stabil und verwindungssteif, wobei die Stabilität und Verwindungssteifigkeit auch durch die Fensterscheibe 4 und ihre besondere Verbindung mit den beiden Schenkeln 8 und 10 des Fensterrahmens 2 begründet wird.

Es ist von Vorteil, wenn in den Kastenhohlraum der Tür zwecks thermischer und mechanischer Verstärkung ein Verstärkungselement 18 eingesetzt ist. Fig. 2 zeigt eine bevorzugte Ausführungsform eines Verstärkungselements 18, welches eine H-förmige Ausbildung besitzt und aus Stahlblechprofilen, Aluminiumprofilen oder einem verstärkten, insbesondere glasfaserverstärkten Kunststoff bestehen kann. Der etwa horizontal ausgerichtete Steg 19 des Verstärkungselements 18 weist einen U-förmigen Querschnitt mit zum Türaussenteil 3 gerichteter Öffnung auf. Die Schenkel 20, 21 des Verstärkungselements 18 besitzen ebenfalls einen U-förmigen Querschnitt, wobei die freien Schenkelenden gegeneinander ausgerichtet sind. Der Steg 19 ist mit den Schenkeln 20, 21 einstückig ausgebildet oder mit diesen durch Schweissen oder Nieten verbunden. Es soll gemäss einer erfindungsgemässen Variante möglich sein, das Verstärkungselement 18 gleichzeitig als Luftkanal auszubilden. Zu diesem Zweck weist der Steg eine Öffnung 22 in Höhe der Austrittsöffnung 9 des Türinnenteils und einen rohrförmigen Ansatz 23 mit zumindest einer Schlitzdüse 24 auf, die einem im Innenschenkel 10 des Fensterrahmens 2 vorgesehenen Schlitz gegenübersteht. Die Luftzufuhr erfolgt über eine Eintrittsdüse 26 in der vorderen Stirnwand des Türinnenteils 1. Der Schenkel 21 des Verstärkungselements 18 besitzt Bohrungen 25 zum Anschluss der Scharniere 6 und im oberen Bereich eine der Kontur des Fensterrahmens 2 im vorderen Türbereich angepasste Abwinklung. Das Verstärkungselement 18 wird in die Kastenöffnung des Türinnenteils 1 eingelegt und mit diesem vorzugsweise verklebt. Danach sitzen die oberseitig des Steges 19 befindlichen Schenkelbereiche bereichsweise in dem Fensterrahmen 2, so dass neben einer Stabilisierung des Türunterteils 7 auch eine solche für den Fensterrahmen 2 verwirklicht ist. Beim Zusammenbau der Tür nach Fig. 2 wird also zunächst das Verstärkungselement 18 mit dem Türinnenteil 1 verklebt und auf diese Einheit dann das Türaussenteil 3 aufgeklebt.

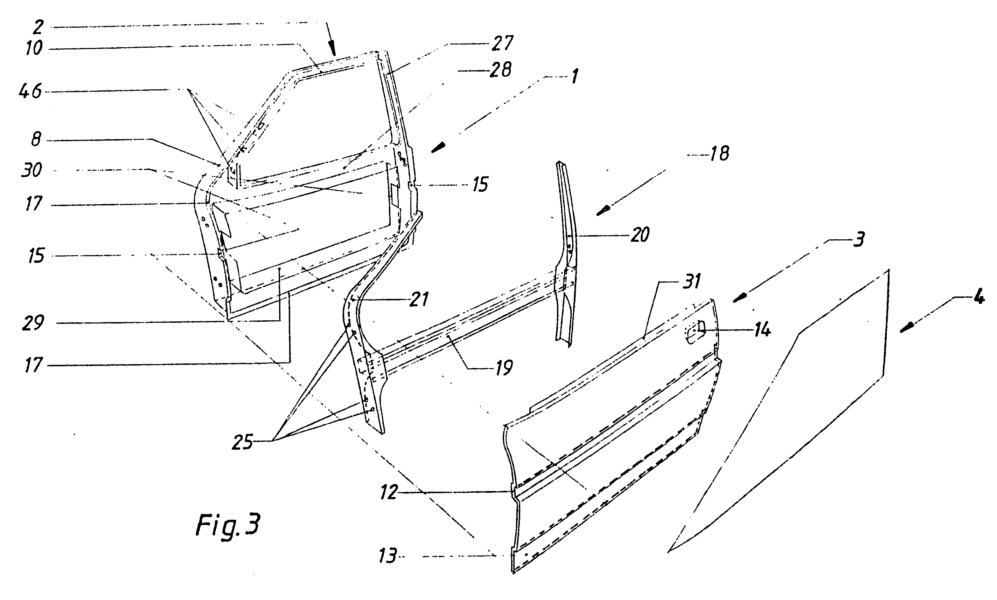

Das in Fig. 3 gezeigte Ausführungsbeispiel der Tür sieht ein Türinnenteil 1 vor, welches mit dem Fensterrahmen 2 aus einem einwandigen Kunststofformteil besteht. Der Fensterrahmen 2 weist dabei einen etwa U-förmigen Querschnitt mit einem senkrecht zur Türebene nach aussen offenen Kanal 27 auf, welcher sich umlaufend über den Randbereich des Türinnenteils 1 fortsetzt und in offener Verbindung mit einem entsprechend geformten Querkanal 28 steht. Das Türinnenteil 1 weist damit drei U-förmige horizontal verlaufende Versteifungen auf, die eine erhöhte Festigkeit bewirken. Eine vierte durch den Steg 19 gebildete, horizontal verlaufende Versteifung erhält die Tür nach Fig. 3 durch ein schon anhand der Fig. 2 beschriebenes Verstärkungselement 18. Für die Plazierung des Verstärkungselements 18 im Türinnenteil 1 sind in dem umlaufenden Steg 29, der den Kanal 27 im Türunterteil 7 einseitig begrenzt, Aussparungen 30 vorgesehen, welche vom Steg 19 durchgriffen werden. Beim Ausführungsbeispiel nach Fig. 3 ist die Fensterscheibe 4 getrennt vom Türaussenteil 3 ausgebildet. Das mit einer Nut 12, einer nach hinten zurückspringenden Randkante 13 und einer Türgriföffnung 14 ausgebildete Türaussenteil 3 weist am Kopfende einen angeformten Flansch 31 auf, gegen den sich der untere Randbereich der Fensterscheibe 4 abstützt und mit dem die Fensterscheibe 4 vorzugsweise verklebt ist.

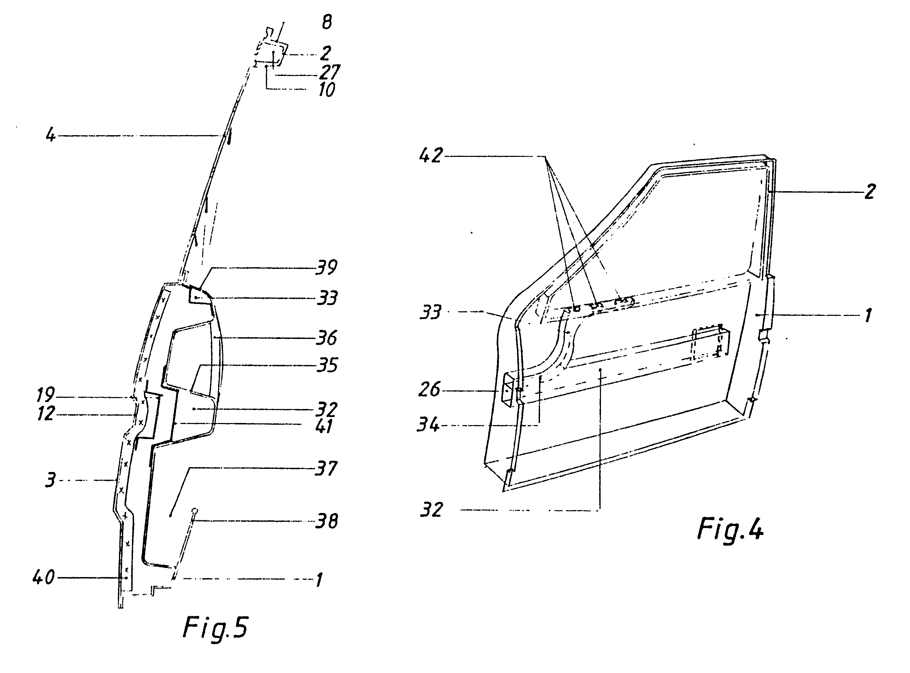

In Fig. 4 ist ein Türinnenteil 1 mit Fensterrahmen 2 gezeigt, welches einen den Fig. 1 bis 3 entsprechenden Grundaufbau aufweist, mit einem Verstärkungselement 18 ausrüstbar und mit einem Türaussenteil 3 nebst Fensterscheibe 4 zu einer kompletten Tür vervollständigbar ist. Fig. 4 soll verdeutlichen, wie das Türinnenteil 1 beispielsweise mit einem Luftkanal 32 ausgebildet sein kann. Dieser Luftkanal 32 erstreckt sich etwa horizontal von der vorderen zur hinteren Stirnwand des Türinnenteils 1 und kann einstückig und materialeinheitlich mit diesem ausgebildet sein. Der Luftkanal 32 kann einen Verbindungskanal 33 aufweisen, welcher Entfrosterdüsenschlitze 42 für die Fensterscheibe 4 mit Frisch- oder Warmluft versorgt. Der Luftkanal 32 steht vorderendig mit einer türstirnseitigen Eintrittsdüse 26 und hinterendig mit einer den Boden des Türunterteils 7 durchsetzenden Austrittsöffnung in Durchlassverbindung. Es ist möglich, die Eintrittsdüse 26 als Doppeldüse auszubilden und den Verbindungskanal 33 durch eine Wandung 34 vom Luftkanal zu trennen.

Fig. 5 zeigt den Schnitt durch eine bevorzugte Ausführungsform einer erfindungsgemässen Tür. Das Türinnenteil 1 weist hier eine besonders stabile, labyrinthförmige Gestaltung mit einer einstückig angeformten Armauflage 35, einem Zuziehgriff 36 und mit zumindest einer Ablageschale 37 auf. Die Ablageschale 37 ist vorderseitig bereichsweise durch einen mit verdicktem Kopf ausgebildeten Steg 38 begrenzt.

Weiterhin zeigt Fig. 5 deutlich die U-förmige Ausbildung des Fensterrahmenquerschnitts und die Schliessung des dadurch gebildeten Kanals 27 durch die Fensterscheibe. Beim Ausführungsbeispiel nach Fig. 5 ist der Luftkanal 32 zwischen der Armauflage 35 und dem Ablagefach 37 ausgebildet und in Richtung zum Türaussenteil 3 durch eine vorgeformte Folie 41 verschlossen, die vorzugsweise mit dem Türinnenteil 1 verklebt ist. Weiterhin lässt Fig. 5 den Luftverbindungskanal 33 für die Versorgung der Defrosterdüsen 39 erkennen. Beim Beispiel nach Fig. 5 kann die Tür ebenfalls durch ein Verstärkungselement 18 versteift sein, von dem der Steg 19 dargestellt ist. Das Türaussenteil 3 ist auf seiner nach dem Zusammenbau der Tür nicht sichtbaren Fläche mit einer Antidröhn- bzw. Dämmschicht 40 belegt, die alternativ oder zusätzlich auch an der Rückseite des Türinnenteils 1 vorgesehen sein kann.

Im vorderen Bereich des Fensterrahmens 2 sind im Schenkel 10 zur Fensterscheibe 4 gerichtete Luftaustrittsöffnungen 46 vorgesehen. Die Luftversorgung erfolgt hier dadurch, dass der Schenkel 21 des Verstärkungselements 18 zumindest im oberen Bereich mit dem Luftkanal 32 des Steges 19 in offener Verbindung steht.

## Patentansprüche

1. Tür insbesondere Fahrzeugtür, die im wesentlichen aus einem Türinnenteil (1) und einem Türaussenteil (3), einem Fensterrahmen (2) und einer Fensterscheibe (4) besteht, deren Türinnenteil (1) ein kastenförmiges, nach aussen offenes Unterteil (7) aus Kunststoff sowie den damit einstückig ausgebildeten Fensterrahmen (2) umfasst und fest mit dem ebenfalls aus Kunststoff bestehenden Türaussenteil (3) zusammengefügt ist, dadurch gekennzeichnet, dass das Türinnenteil (1) mit einer umlaufenden, nach aussen abgewinkelten Randkante (8) ausgebildet ist und den nach aussen offenen, im Querschnitt U-förmigen Fensterrahmen (2) aufweist, der einen durch die Randkante (8) gebildeten Aussenschenkel und einen die Fensterrahmenöffnung (11) umrahmenden Innenschenkel (10) umfasst, und dass das Türaussenteil (3) im Bereich des Unterteils (7) mit der das Türinnenteil (1) umrahmenden Randkante (8) und die Fensterscheibe (4) im Bereich des Fensterrahmens (2) ebenfalls mit der Randkante (8) und zusätzlich mit dem die Fensterrahmenöffnung (11) umrahmenden Innenschenkel (10) jeweils vorzugsweise durch Kleben oder stoffschlüssig durch Schweissen zusammengefügt ist.

2. Tür nach Anspruch 1, dadurch gekennzeichnet, dass das Türinnenteil (1) mit Fensterrahmen (2) aus einem einwandigen Kunststofformteil besteht, wobei der Fensterrahmen (2) einen etwa U-förmigen Querschnitt mit einem senkrecht zur Türebene nach aussen offenen Kanal (27) aufweist, welcher sich umlaufend über den Randbereich des Türinnenteils (1) fortsetzt und in offener Verbindung mit einem entsprechend geformten Querkanal (28) etwa in der Türmitte steht und dass das aus einem ebenfalls einwandigen Kunststofformteil bestehende Türaussenteil (3) nebst Fensterscheibe (4) unter etwa paralleler Anlage und zumindest im Fensterrahmenbereich vollständiger Schliessung des Kanals (27) mit dem Türinnenteil (1) zusammengefügt ist.

3. Tür nach einem der Ansprüche 1 oder 2, gekennzeichnet durch ein zwischen Türinnenteil (1) und Türaussenteil (3) angeordnetes Verstärkungselement (18).

4. Tür nach einem der Ansprüche 1 bis 3, dadurch gekennzeichnet, dass das Verstärkungselement (18) in dem nach aussen offenen Kanal (27) des Fensterrahmens (2) und Türinnenteils (1) angeordnet ist.

5. Tür nach einem der Ansprüche 1 bis 4, dadurch gekennzeichnet, dass das Verstärkungselement (18) aus einem wärme- und formstabilen metallischen oder Kunststoff-Werkstoff besteht.

6. Tür nach einem der Ansprüche 1 bis 5, dadurch gekennzeichnet, dass das Verstärkungselement (18) etwa H-förmig ausgebildet ist.

7. Tür nach einem der Ansprüche 1 bis 6, dadurch gekennzeichnet, dass die Seitenschenkel (20, 21) des Verstärkungselements (18) in den im Fensterrahmen (2) und Türinnenteil (1) seitlich verlaufenden Kanalbereichen angeordnet sind.

8. Tür nach einem der Ansprüche 1 bis 6, dadurch gekennzeichnet, dass die Seitenschenkel (20, 21) des Verstärkungselements (18) jeweils einen U-förmigen Querschnitt aufweisen und mit ihren freien Schenkelenden gegeneinander ausgerichtet sind und dass der waagerecht verlaufende Steg (19) ebenfalls einen U-förmigen Querschnitt aufweist, dessen Öffnungskanal nach aussen offen ist.

9. Tür nach einem der Ansprüche 1 bis 8, dadurch gekennzeichnet, dass das Verstärkungselement (18) mit dem Türinnenteil (1) verklebt ist.

10. Tür nach einem der Ansprüche 1 bis 9, dadurch gekennzeichnet, dass an dem Verstärkungselement (18) die Türscharniere (6) und das Türschloss (5) angeordnet sind.

11. Tür nach einem der Ansprüche 1 bis 10, dadurch gekennzeichnet, dass zumindest der den Fensterrahmen- und Türinnenteil-Kanal (27) aussenseitig begrenzende Schenkel (8) durch einen am freien Schenkelende umlaufend angeformten Aussenflansch (17) verbreitert ist.

12. Tür nach einem der Ansprüche 1 bis 11, dadurch gekennzeichnet, dass das Türaussenteil (3) eine etwa formschlüssig in die Kanalöffnung des Steges (19) des Verstärkungselements (18) eingreifende Einziehung oder Sicke (12) aufweist.

13. Tür nach einem der Ansprüche 1 bis 12, dadurch gekennzeichnet, dass das Türaussenteil (3) am oberen Randbereich einen angeformten Falz (31) für die Abstützung des unteren Fensterscheibenrandbereichs aufweist.

14. Tür nach einem der Ansprüche 1 bis 13, dadurch gekennzeichnet, dass die Fensterscheibe (4) mit ihrem unteren Randbereich auf den Falz (31) aufgeklebt ist.

15. Tür nach einem der Ansprüche 1 bis 14, dadurch gekennzeichnet, dass die Fensterscheibe (4) und das Türaussenteil (3) aus durchsichtigem Kunststoff bestehen und als einstückige, materialeinheitliche Baueinheit ausgebildet sind.

16. Tür nach einem der Ansprüche 1 bis 15, dadurch gekennzeichnet, dass das Türinnenteil (1) durch rippenförmig ein- und/oder ausgeformte versteifende Wandabschnitte gebildete Integrationsbestandteile, wie Ablagefächer (37), Armauflage (35), Zuziehgriff (36) und dergleichen aufweist.

17. Tür nach einem der Ansprüche 1 bis 16, dadurch gekennzeichnet, dass zwischen dem Türinnenteil (1) und dem Türaussenteil (3) ein an Frisch- und Warmluftzuleitungen anschliessbarer, zum Fond verlaufender und mit gegen die Fensterscheibe (4) gerichteten Luftaustrittsdüsen (9, 24, 39) versehener Luftkanal (32) ausgebildet ist.

18. Tür nach Anspruch 17, dadurch gekennzeichnet, dass der Luftkanal (32) im Türinnenteil (1) als längsverlaufende Nut ausgebildet und in Richtung zum Türaussenteil (3) durch eine verformte Kunststoffolie (41) verschlossen ist.

19. Tür nach einem der Ansprüche 1 bis 17, dadurch gekennzeichnet, dass das zum Aussteifen des Türinnenteils (1) vorgesehene Verstärkungselement (18) gleichzeitig als an eine Frisch- und Wärmeluftzuleitung anschliessbarer Luftkanal (32) ausgebildet ist, von dem zum Fond und gegen die Frontscheibe (4) gerichtete Luftaustrittsdüsen (22, 23, 24) ausgehen.

20. Tür nach einem der Ansprüche 1 bis 19, dadurch gekennzeichnet, dass das Türaussenteil (3) und/oder das Türinnenteil (1) eine Dämmschichtauflage (40) trägt.

21. Tür nach einem der Ansprüche 1 bis 20, dadurch gekennzeichnet, dass zumindest der oberhalb des Steges (19) des Verstärkungselements (18) befindliche Bereich des Schenkels (21) mit dem Luftkanal (32) des Steges (19) in offener Verbindung steht, und zwar zur Luftversorgung von im vorderen Bereich des Fensterrahmens (2) vorgesehenen Luftaustrittsöffnungen (46).

**Claims**

1. A door, especially a vehicle door, which consists essentially of an inner door part (1) and an outer door part (3), a window frame (2) an a window pane (4), of which the inner door part (1) comprises a box-shaped, outwardly open lower part (7) of synthetic plastics material and the window frame (2) made in one piece therewith and is joined firmly together with the outer door part (3), which likewise consists of synthetic plastics material, characterised in that the inner door part (1) is formed with a surrounding, outwardly angled-off marginal edge (8) and comprises the outwardly open window frame (2) of U-shaped cross-section which includes an outer leg formed by the marginal edge (8) and an inner leg (10) framing the window frame opening (11), and in that the outer door part (3) is joined together in the region of the lower part (7) with the marginal edge (8) framing the inner door part (1) and the window pane (4) is joined together in the region of the window frame (2) likewise with the marginal edge (8) and additionally with the inner leg (10) framing the window frame opening (11), in each case preferably by adhesion or integrally by welding.

2. A door according to Claim 1, characterised in that the inner door part (1) with window frame (2) single-walled synthetic plastics material moulding, the window frame (2) has a somewhat U-shaped cross-section with a channel (27) outwardly open perpendicularly of the door plane, which channel continues extending around over the marginal zone of the inner door part (1) and is in open connection, approximately in the middle of the door, with a correspondingly shaped transverse channel (28) and in that the outer door part (3) with window pane (4), consisting of a likewise single-walled synthetic plastics material moulding, is joined together with the inner door part (1), with approximately parallel abutment and, at least in the window frame region, complete closure of the channel (27).

3. A door according to any one of Claims 1 or 2, characterised by a reinforcing element (18) arranged between inner door part (1) and outer door part (3).

4. A door according to any one of Claims 1 to 3, characterised in that the reinforcing element (18) is arranged in the outwardly open channel (27) of the window frame (2) and inner door part (1).

5. A door according to any one of Claims 1 to 4, characterised in that the reinforcing element (18) consists of a thermally stable and shape-stable metallic or synthetic plastics material.

6. A door according to any one of Claims 1 to 5, characterised in that the reinforcing element (18) is made somewhat H-shaped.

7. A door according to any one of Claims 1 to 6, characterised in that the side legs (20, 21) of the reinforcing element (18) are arranged in the channel zones extending laterally in the window frame (2) and inner door part (1).

8. A door according to any one of Claims 1 to 6, characterised in that the side legs (20, 21) of the reinforcing element (18) each have a U-shaped cross-section and are directed with their free leg ends towards one another and in that the horizontally extending flange (19) likewise has a U-shaped cross-section, the opening channel of which is outwardly open.

9. A door according to any one of Claims 1 to 8, characterised in that the reinforcing element (18) is attached by adhesion to the inner door part (1).

10. A door according to any one of Claims 1 to 9, characterised in that the door hinges (6) and the door lock (5) are arranged on the reinforcing element (18).

11. A door according to any one of Claims 1 to 10, characterised in that at least the leg (8) externally limiting the window frame and inner door part channel (27) is widened by an external flange (17) formed in surrounding manner on the free leg end.

12. A door according to any one of Claims 1 to 11, characterised in that the outer door part (3) comprises an indent or corrugation (12) engaging in somewhat shape-engaging manner in the channel opening of the flange (19) of the reinforcing element (18).

13. A door according to any one of Claims 1 to 12, characterised in that the outer door part (3) comprises a formed-on rebate (31) at the upper marginal zone for the supporting of the lower window pane marginal zone.

14. A door according to any one of Claims 1 to 13, characterised in that the window pane (4) is stuck with its lower marginal zone on to the rebate (31).

15. A door according to any one of Claims 1 to 14, characterised in that the window pane (4) and the outer door part (3) consist of transparent synthetic plastics material and are formed as a one-piece construction unit all of the same material.

16. A door according to any one of Claims 1 to 15, characterised in that the inner door part (1) comprises integral components, such as storage compartments (37), arm rest (35), closer handle (36) and the like, formed by stiffening wall sections shaped inwardly and/or outwardly in rib form.

17. A door according to any one of Claims 1 to 16, characterised in that an air passage (32) connectable to fresh air and hot air supply conduits, extending to the background and provided with air outlet nozzles (9, 24, 39) directed against the window pane (4) is formed between the inner door part (1) and the outer door part (3).

18. A door according to Claim 17, characterised in that the air passage (32) is formed in the inner door part (1) as a longitudinally extending groove and is closed in the direction towards the outer door part (3) by a deformed synthetic plastics material foil (41).

19. A door according to any one of Claims 1 to 17, characterised in that the reinforcing element (18) provided to stiffen the inner door part (1) is formed at the same time as an air passage (32) connectable to a fresh and hot air supply conduit, from which passage there issue air outlet nozzles (22, 23, 24) directed rearwardly and against the front part of the window pane (4).

20. A door according to any one of Claims 1 to 19, characterised in that the outer door part (3) and/or the inner door part (1) carries an added insulating layer (40).

21. A door according to any one of Claims 1 to 20, characterised in that at least the region of the leg (21) situated above the flange (19) of the reinforcing element (18) is in open connection with the air passage (32) of the flange (19), namely for the supply of air to air outlet openings (46) provided in the forward region of the window frame (2).

**Revendications**

1. Porte, notamment portière de véhicule, comportant essentiellement un élément intérieur de porte (1) et un élément extérieur de porte (3), un cadre de fenêtre (2) et une vitre (4), dont l'élément intérieur (1) comprend une partie inférieure (7), en matière plastique, en forme de caisson, ouverte vers l'extérieur, ainsi que le cadre de fenêtre formé d'une seule pièce avec celle-ci, et qui est assemblé de manière fixe à l'élément extérieur de porte (3) également en matière plastique, caractérisée en ce que l'élément intérieur de porte (1) présente une bordure (8) continue, coudée vers l'extérieur, et le cadre de fenêtre (2) ouvert vers l'extérieur, de section transversale en U qui comprend une aile extérieure formée par la bordure (8) et une aile intérieure (10) encadrant l'ouverture (11) du cadre de fenêtre, et en ce que l'élément extérieur de porte (3) est assemblé de préférence par collage ou par soudage, dans la zone de la partie inférieure (7) à la bordure (8) encadrant l'élément intérieur de porte (1), tandis que la vitre (4) est assemblée de même dans la zone du cadre de fenêtre (2) également à la bordure (8) et en plus à l'aile intérieure (10) encadrant l'ouverture (11) du cadre de fenêtre.

2. Porte selon la revendication 1, caractérisée en ce que l'élément intérieur de porte (1) avec le cadre de fenêtre (2) est constitué d'un élément moulé en matière plastique à paroi simple, le cadre de fenêtre (2) ayant une section transversale en U et présentant un conduit (27) ouvert vers l'extérieur, perpendiculaire au plan de la porte, qui se prolonge tout autour sur la zone de bordure de l'élément intérieur de porte (1), et communique librement avec un conduit transversal (28) de forme correspondante, à peu près au centre de la porte, et en ce que l'élément extérieur de porte (3) avec la vitre (4), constitué également d'un élément moulé en matière plastique à paroi simple, est assemblé à l'élément intérieur de porte (1) par application à peu près parallèle et fermeture complète du conduit (27), au moins dans la zone du cadre de fenêtre.

3. Porte selon l'une des revendications 1 ou 2, caractérisée par un élément de renfort (18) disposé entre l'élément intérieur de porte et l'élément extérieur de porte (3).

4. Porte selon l'une des revendications 1 à 3, caractérisée en ce que l'élément de renfort (18) est disposé dans le conduit (27) ouvert vers l'extérieur du cadre de fenêtre (2) et l'élément intérieur de porte (1).

5. Porte selon l'une des revendications 1 à 4, caractérisée en ce que l'élément de renfort (18) est réalisé dans un matériau métallique ou une matière plastique, résistants à la chaleur et indéformables.

6. Porte selon l'une des revendications 1 à 5, caractérisée en ce que l'élément de renfort (18) a à peu près la forme d'un H.

7. Porte selon l'une des revendications 1 à 6, caractérisée en ce que les ailes latérales (20, 21) de l'élément de renfort (18) sont disposées dans les zones de conduit latérales par rapport au cadre de fenêtre (2) et à l'élément intérieur de porte (1).

8. Porte selon l'une des revendications 1 à 6, caractérisée en ce que les ailes latérales (20, 21) de l'élément de renfort (18) ont une section transversale en U, en ce que leurs extrémités libres sont dirigées l'une vers l'autre, et en ce que l'entretoise (19) horizontale présente également une section transversale en U dont le conduit d'ouverture est ouvert vers l'extérieur.

9. Porte selon l'une des revendications 1 à 8, caractérisée en ce que l'élément de renfort (18) est collé sur l'élément intérieur de porte (1).

10. Porte selon l'une des revendications 1 à 9, caractérisée en ce que les charnières de porte (6) et la serrure de porte (5) sont disposées sur l'élément de renfort (18).

11. Porte selon l'une des revendications 1 à 10, caractérisée en ce que l'aile (8) au moins délimitant vers l'extérieur le conduit (27) de cadre de fenêtre et l'élément de porte intérieur, est élargie par une bride extérieure (17) continue, venue de moulages sur l'extrémité libre de l'aile.

12. Porte selon l'une des revendications 1 à 11, caractérisée en ce que l'élément extérieur de porte (3) présente un rétrécissement ou une rainure (12) pénétrant dans l'ouverture du conduit de l'entretoise (19) et de l'élément de renfort (18), pour former un assemblage géométrique.

13. Porte selon l'une des revendications 1 à 12, caractérisée en ce que l'élément extérieur de porte (3) présente sur sa zone de bordure supérieure une feuillure (31) venue de moulage servant d'appui à la zone de bordure inférieure de la vitre.

14. Porte selon l'une des revendications 1 à 13, caractérisée en ce que la vitre (4) est collée par sa zone de bordure inférieure sur la feuillure (31).

15. Porte selon l'une des revendications 1 à 14, caractérisée en ce que la vitre (4) et l'élément extérieur de porte (3) sont réalisés dans une matière plastique transparente pour former une unité de construction d'une seule pièce et d'une même matière.

16. Porte selon l'une des revendications 1 à 15, caractérisée en ce que l'élément intérieur de porte (1) présente des éléments constitutifs intégrés, tels que des vide-poches (37), un accoudoir (35), une poignée à tirer (36), etc., formés par des sections de paroi servant de raidisseurs, en forme de nervures, formés en relief et/ou en creux.

17. Porte selon l'une des revendications 1 à 16, caractérisée en ce qu'un conduit d'air (32) pouvant être raccordé aux arrivées d'air frais et d'air chaud, orienté en direction du fond, et pourvu de buses de sortie d'air (9, 24, 39) dirigées vers la vitre (4), est formé entre l'élément intérieur de porte (1) et l'élément extérieur de porte (3).

18. Porte selon la revendication 17, caractérisée en ce que le conduit d'air (32) a la forme d'une rainure s'étendant longitudinalement dans l'élément intérieur de porte (1), et est fermé en direction de l'élément extérieur de porte (3) par une feuille de matière plastique (41) préformée.

19. Porte selon l'une des revendications 1 à 17, caractérisée en ce que l'élément de renfort (18) prévu pour rendre rigide l'élément intérieur de porte (1), est en même temps un conduit d'air (32) pouvant être raccordé à une arrivée d'air frais et d'air chaud, duquel partent des buses de sortie d'air (22, 23, 24) dirigées vers le fond et vers la vitre (4).

20. Porte selon l'une des revendications 1 à 19, caractérisée en ce que l'élément extérieur de porte (3) et/ou l'élément intérieur de porte (1) est revêtu d'une couche isolante (40).

21. Porte selon l'une des revendications 1 à 20, caractérisée en ce que la zone au moins de l'aile (21) se trouvant au-dessus de l'entretoise (19) de l'élément de renfort (18), communique librement avec le conduit d'air (32) de l'entretoise (19), pour alimenter en air les orifices de sortie d'air (46) prévus dans la zone avant du cadre de fenêtre (2).

Fig. 2

Fig. 1

EP 0 096 188 B1

Fig.3

EP 0 096 188 B1

Fig.4

Fig.5